# EUROPEAN PATENT SPECIFICATION

(11) **EP 2 993 924 B1**
(45) Date of publication and mention of the grant of the patent: **29.08.2018**
(21) Application number: 13883533.5
(22) Date of filing: 02.05.2013
(51) Int. Cl.: H04W 4/08, H04W 88/02, H04M 1/2745, G06F 17/30, G06F 3/01, H04W 4/20, H04L 29/08

(54) **TERMINAL AND METHOD FOR GROUPING CONTACT PERSONS**
ENDGERÄT UND VERFAHREN ZUR GRUPPIERUNG VON KONTAKTPERSONEN
TERMINAL ET PROCÉDÉ DE GROUPEMENT DE CONTACTS

(43) Date of publication of application: 09.03.2016
(73) Proprietor: Yulong Computer Telecommunication Scientific (Shenzhen) Co. Ltd., Shenzhen, Guangdong 518057 (CN); Dongguan Yulong Telecommunication Tech Co. Ltd., Guangdong 523808 (CN)
(72) Inventor: SHENG, Jingen, Shenzhen Guangdong 518057 (CN); JING, Xueying, Shenzhen Guangdong 518057 (CN); WANG, Xiaodan, Shenzhen Guangdong 518057 (CN); TANG, Sha, Shenzhen Guangdong 518057 (CN); YU, Huijuan, Shenzhen Guangdong 518057 (CN); WANG, Jianqiang, Shenzhen Guangdong 518057 (CN); HE, Xiaobing, Shenzhen Guangdong 518057 (CN); XIAO, Wei, Shenzhen Guangdong 518057 (CN)
(74) Representative: Johnson, Richard Alan
(86) International application number: PCT/CN2013/075068
(87) International publication number: WO 2014/176772

(56) References cited:
- WO-A1-2012/041151
- CN-A- 102 067 463
- CN-A- 102 111 721
- CN-A- 102 238 096
- CN-A- 102 984 049
- CN-A- 103 001 855
- US-A1- 2007 288 627
- US-A1- 2010 245 262
- US-B1- 7 644 144

## Description

### FIELD OF THE INVENTION

The present invention relates to the field of data analysis technology, and more particularly, to a terminal and a method for grouping contact persons.

### BACKGROUND OF THE INVENTION

In the existing technology, although most social products have the function of grouping contact persons, in most case, the social products need a user to group the contact persons manually. In addition, for some intelligent grouping method, the contact persons can be automatically grouped mainly based on some fields (such as companies, positions, names, etc.) of new contact persons or face recognition, geographic information of numbers of the contact persons.

Above described grouping methods, whether the contact persons are grouped manually or automatically, are unfit for operation, that is, the grouping methods are complicated to operate, although there are some intelligent grouping methods. However, the grouping methods are unable to provide the users with an instant and common concern topic, so the users cannot establish the same or similar topic to conveniently conduct social intercourse with the contact persons.

Thus, a new technology of grouping contact persons is needed, which can group the contact persons according to state information of the contact persons, so as to enable the contact persons having associated state information to be divided into one group, such that a user can quickly determine a common topic with other contact persons and then conduct social contact conveniently and successfully.

US 2010/0245262 discloses a system for managing a subset of user contacts on a telecommunications device based on contextual information associated with the subset of user contacts.

WO 2012/041151 discloses an intelligent grouping method for a mobile terminal contact book based on extracted information about a discovered event.

### SUMMARY OF THE INVENTION

To solve the above problems, the present disclosure aims to provide a technology for grouping contact persons, which can group the contact persons according to state information about them, so as to enable the contact persons having associated state information to be divided into one group, such that a user can quickly determine a common topic with the contact persons and then conduct social intercourse easily and successfully.

According to one aspect of the invention, there is provided a terminal as set out in claim 1.

According to another aspect of the invention, there is provided a method for grouping contact persons as set out in claim 8.

Preferred features are set out in the dependent claims.

By means of the technical solution of the present invention, contact persons can be grouped according to state information about them, so as to enable the contact persons having associated state information to be divided into one group, such that a user can quickly determine a common topic with the contact persons and then conduct social intercourse easily and successfully.

### BRIEF DESCRIPTION OF THE DRAWINGS

FIG. 1 is a block diagram of a terminal according to an embodiment of the present disclosure;
FIG. 2 is a flowchart of a method for grouping contact persons according to another embodiment of the present disclosure;
FIG. 3 is a detailed flowchart of a method for grouping contact persons according to another embodiment of the present disclosure; and
FIGS. 4A-FIG. 4E are schematic diagrams of description of grouping contact persons according to the present disclosure.

### DETAILED DESCRIPTION OF ILLUSTRATED EMBODIMENTS

In order to illustrate the embodiments or existing technical solutions more clearly, a brief description of drawings that assists the description of embodiments of present disclosure or existing art will be provided below. It should be noted that, in the case of no conflict, the embodiments of the present disclosure and the features of each embodiment can be combined mutually.

The invention will now be described in detail on the basis of preferred embodiments and drawings. It is to be understood that various changes may be made without departing from the scope of the disclosure and the embodiments of the present disclosure and features in the embodiments can be combined with each other.

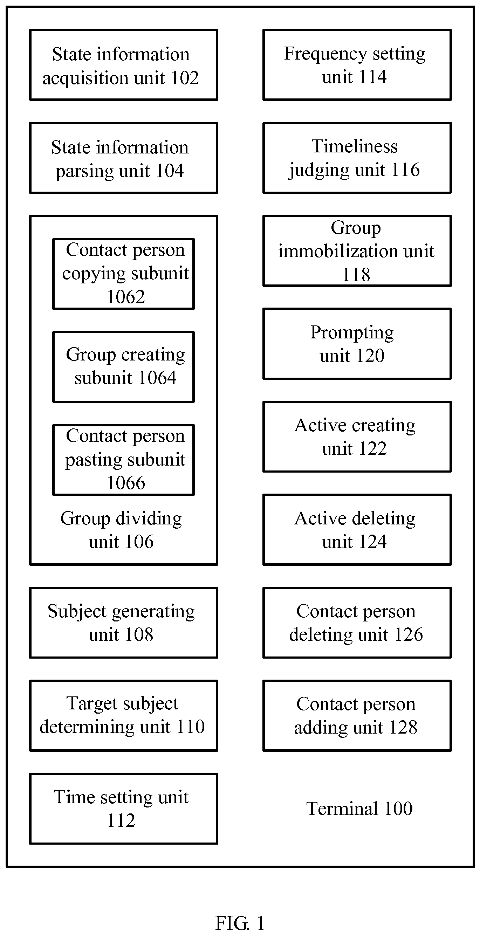

Referring to FIG. 1, FIG. 1 is a block diagram of a terminal according to an embodiment of the present disclosure.

As shown in FIG. 1, a terminal 100 provided by the embodiment of the present disclosure includes: a state information acquisition unit 102, configured for acquiring state information about each contact person in a contact person list according to a preset time period; a state information parsing unit 104, configured for parsing the state information about each contact person to determine whether the state information about any contact person of all the contact persons and the state information about at least one other contact person of all the contact persons have an associated content or not; and a grouping dividing unit 106, configured for automatically dividing the contact persons corresponding to the state information having the associated content, which are taken as relevant contact persons, into one group in the case where there is the associated content.

In the embodiment of the present disclosure, the contact person list can be an address book of the Internet, such as the address book of QQ, Fetion or other social tools or instant messaging (IM) services. When a contact person is in use of a social tool, that is, when a social tool is in use by a user, then the contact person tends to edit his/her information such as mental state, geographical location information and daily life information into the state information. When the user also uses the social tools, the state information of the contact persons is usually displayed behind or at one side of pictures (such as contact photo) of the contact person, then the terminal 100 can obtain the state information about each contact person and parse the state information, and determine whether the state information about each contact person has an associated content or not with each other. If the terminal 100 determines that the state information of each contact person has the associated content, then the terminal 100 can determine contents such as present mental state, geographical location and daily life of the contact persons have common points, or the terminal 100 can determine which contact persons are listening to the same songs, playing the same games, and so one, then the terminal 100 can divide the contact persons corresponding to the state information having the common points, which are taken as relevant contact persons, into one group. Thus, the user can know or determine the common points of the contact persons in each group according to the state information of the contact persons in each group, and then quickly contact and communicate with the contact persons in each group according to the common points. Thus, by means of the technical solution, contact persons can be automatically grouped according to the state information, but also can automatically provide social circles each of which has a common topic for the user, therefore improving the user experience.

In detail, for example, when the user logs in an IM service such as QQ, and there are 20 contact persons in the contact person list, then the terminal 100 determines whether current time is in the preset time period or not; if the current time is in the preset time period, then the terminal 100 can automatically acquire the state information about each contact person of the 20 contact persons, and further parse the state information about each contact person by means of, such as, keyword recognition technology or semantic recognition technology. For example, the state information of a contact person F1 is: France's cold ah, really can't stand it! The state information of a contact person F2 is: Come to Paris, it's a romantic city. The state information of a contact person F3 is: The Triumphal arch is just like that, saw just know it's very common. The state information of a contact person F4 is: met a Huawei employee on a street of France. The state information of a contact person F5 is: The Louvre, is really very good! After parsing, the terminal 100 can determine that the state information of above mentioned five contact persons F1, F2, F3, F4 and F5 is associated with "France", that is, the state information of the above mentioned five contact persons F1, F2, F3, F4 and F5 has the associated content, then the above mentioned five contact persons F1, F2, F3, F4 and F5 are divided into one independent group. Thus, when seeing the group, the user can determine the common topic of the five contact persons in the group is "France", so that the user can conveniently establish a communication topic with the contact persons in the group, or conduct social intercourse with the whole group.

Preferably, in the above mentioned technical solution, the group dividing unit 106 can include a contact person copying subunit 1062, a group creating subunit 1064 and a contact person pasting subunit 1066. In detail, the contact person copying subunit 1062 is configured for copying the relevant contact persons corresponding to the state information having the associated content; the group creating subunit 1064 is configured for creating an associated group according to the associated content; and the contact person pasting subunit 1066 is configured for pasting the relevant contact persons to the associated group.

In this technical solution, when automatically dividing the contact persons according to the state information, the contact persons corresponding to the state information having the associated content cannot be moved to the group which is newly created (namely, a newly created group), but are copied to the newly created group. Thus, when the state information of the contact persons has an association with multiple groups, then the contact persons corresponding to the state information having the associated content can be copied and pasted to each group.

For example, if the 20 contact persons in the contact person list also include a contact person F6 and a contact person F7; the state information of the contact person F6 is: who painted the Mona Lisa? The state information of the contact person F7 is: is the statue of Venus armless before getting into the Louvre? After parsing the state information of the contact persons F6 and F7, the terminal 100 can determine that the state information of contact persons F5, F6 and F7 is associated with "Louvre", that is, the state information of the contact persons F5, F6 and F7 has the associated content, at the same time, the state information of the above mentioned five contact persons F1, F2, F3, F4 and F5 is associated with "France", then a group about "France" is established, and the contact persons F1-F5 are copied to this group about "France". Another group about "Louvre" is established, and the contact persons F5, F6 and F7 are copies to the group about "Louvre", therefore avoiding a contact person who may belong to multiple groups only being divided into one group.

Preferably, the terminal 100 further includes: a subject generating unit 108, configured for generating corresponding subject according to the associated content; a target subject determining unit 110, configured for determining a target subject according to a selection instruction for selecting the subject generated by the subject generating unit 108, and further determining target contact persons about the state information corresponding to the target subject. The group dividing unit 106 is further configured for dividing the target contact persons into one group.

The terminal 100 can generate the subject according to the associated content corresponding to the group, and the user can select the subject of the group required for generation. Thus, according to the subject selected by the user, the terminal 100 can divide the contact persons belonging to the state information corresponding to the subject into one group, thereby realizing manual control of the groups by the user. Moreover, according to the subject of the group, the user can intuitively understand the common topic of the contact persons of each group, and then quickly query each interesting group.

For example, for above mentioned 20 contact persons, after parsing the state information of these contact persons, it is determined that there are two subjects, namely, "France" and "Louvre", and the two subjects of "France" and "Louvre" are displayed. When the user selects any one of the two subjects, such as, "France", then the contact persons can be grouped according to the subject of "France", and the group of "Louvre" is created.

Preferably, the terminal 100 further includes: a time setting unit 112, configured for setting a preset time period according to a time setting instruction.

The user can set a preset time period which is used for automatic grouping operation according to the need, so that generated groups of contact persons can provide the user with a social circle with a common topic, on the other hand, cannot bother the user when the user does not need the social circle with a common topic.

For example, the preset time periods set by the user for executing grouping operation include: 9:00-17:00, 18:00-22:00, and 23:00-24:00, wherein, the preset time period of 9:00 -17:00 can be set as working time of the user, the preset time period of 18:00-22:00 can be set as night playtime of the user, and the preset time period of 23:00-24:00 can be set as time of trying to sleep. In addition, for preset time period of 17:00-18:00, it can be set as dinner time for the user, so that the user can selectively forbid continuing to parse the state information about the contact persons of each group, so as to eat at ease. For preset time period of 22:00-23:00, it can be set as bathing and washing time for the user, so that the user can selectively forbid continuing to parsing the state information about the contact persons of each group.

Preferably, the terminal 100 further includes: a frequency setting unit 114, configured for setting a preset frequency corresponding to the preset time period for acquiring the state information according to a frequency setting instruction. The state information acquisition unit 102 is further configured for acquiring the state information about each contact person according to the corresponding preset frequency during the preset time period.

Since different time periods can be accordingly set different grouping frequencies, so that the terminal 100, according to user's chat demands in different time periods, can provide new topic groups for the user with the corresponding frequencies.

For example, the preset time periods set by the user for executing automatical grouping operation include: 9:00-17:00, 18:00-22:00, and 23:00-24:00, wherein, the preset time period of 9:00 -17:00 can be set as working time of the user, then the preset frequency corresponding to the grouping operation can be set to be lower, such as, acquiring the state information about the contact persons in an IM service such as QQ once every two hours on average and then automatically grouping the contact persons; the preset time period of 18:00-22:00 can be set as night playtime of the user, then the preset frequency corresponding to the grouping operation can be set to be higher, such as acquiring the state information about the contact persons in an IM service such as QQ once every half an hour on average and then automatically grouping the contact persons; and the preset time period of 23:00-24:00 can be set as time of trying to sleep, then the preset frequency corresponding to the grouping operation can be set to be modest, such as acquiring the state information about the contact persons in an IM service such as QQ once every hour and then automatically grouping the contact persons.

Preferably, the terminal 100 further includes: a timeliness judging unit 116, configured for determining whether there is an operation on the group or not in a preset time period, and determining that the group loses timeliness and deleting the group if there is not an operation on the group.

The groups which are not used for a long time or never be used can be deleted, so as to reduce the waste of storage space, and convenient to view common groups for the user. It should be understood that the user can set the preset time period for determining the timeliness according to need.

For example, for above mentioned two groups of "France" and "Louvre", after determining the timeliness of the groups of "France" and "Louvre", the timeliness judging unit 116 determines that the user has not operation on the group of "Louvre" for 72 hours, and the preset time period is 50 hours. Thus, it can be determined that the group of "Louvre" has lost timeliness, and the user loses interest in the topic of this group or the contact persons in this group, then this group is deleted.

Preferably, the terminal 100 further includes: a group immobilization unit 118, configured for setting the group into an immobilization group according to a group immobilization instruction. Wherein, the timeliness judging unit 106 does not determine the timeliness of the immobilization group.

In this embodiment of the present disclosure, the user can set a specified group into a corresponding immobilization group, so that the specified group can exist forever, but not be deleted even if the specified group is not used for a long time, and the specified group can be deleted only by means of manual manipulation of the user.

For example, for the above mentioned two groups of "France" and "Louvre", the user can set the group of "Louvre" into an immobilization group, and the immobilization group will not carry out a timeliness decision, and will continue to exist even if the user does not have any operation on the group of "Louvre" more than the preset time period.

Preferably, the state information acquisition unit 102 is further configured for acquiring the state information about the user, and the state information parsing unit 104 is further configured for parsing the state information about the user and judging whether or not the associated content has a topic content that is associated with the state information about the user. Moreover, the terminal 100 further includes: a prompting unit 120, configured for outputting a prompt message and displaying the topic content when the state information parsing unit 104 determines that the associated content has a topic content that is associated with the state information about the user.

The state information parsing unit 104 can also be configured for parsing the state information about the user, so as to query the associated content associated with the state information about the user, thereby convenient to quickly find out a topic group related to the user.

For example, as described in above example, when the state information about a user is: the heroine of the Phantom of the Louvre is beautiful! After parsing the state information of the user, the terminal 100 can determine that 20 contact persons in an IM service such as QQ have a topic content that is associated with the state information about the user. That is, the state information about the contact persons of F5, F6 and F7 is associated with the state information about the user. Thus, the topic content "Louvre" of the group including the contact persons F5, F6 and F7 is displayed, and the prompting unit 120 can prompt the user that there is an associated topic content "Louvre", so that the user can quickly find out a topic group related to himself.

Preferably, the terminal 100 further includes: an active creating unit 122, configured for dividing selected contact persons into one group according to a selection instruction.

In other embodiment of the present disclosure, the user can manually select the contact persons and divide selected contact persons into one group, but without having to decide whether the state information of the selected contact persons has the same content or not.

For example, the user can manually select the contact persons F1, F2 and F7, and then divide the contact persons F1, F2 and F7 into one group, although the state information about contact persons F1, F2 and F7 does not include the same content.

Preferably, the terminal 100 further includes: an active deleting unit 124, configured for deleting a selected group according to a group deleting instruction.

The user can choose one or a few groups according to need, and delete the selected group by means of executing the group deleting instruction.

For example, for the above mentioned groups of "France" and "Louvre", the user can select the group of "Louvre" and delete the group of "Louvre" according to the group deleting instruction.

Preferably, the terminal 100 further includes: a contact person deleting unit 126, configured for removing a selected contact person from a group which contains the selected contact person according to a contact deleting instruction.

In the embodiment of the present disclosure, the user can choose one or more contact persons from a certain group and perform the contact deleting instruction, so as to delete the selected contact person from the group.

For example, for the above mentioned groups of "France" and "Louvre", the user can login the group of "France", and choose the contact persons of F1 and F2, and perform a delete operation, thereby the contact persons of F1 and F2 removed from the group of "France".

Preferably, the terminal 100 further includes: a contact person adding unit 128, configured for adding a selected contact person to a selected group according to a contact adding instruction.

In the embodiment of the present disclosure, the user can choose one or more contact persons and add the one or more contact persons to a specified group by means of dragging or editing the one or more contact persons.

For example, for above mentioned 20 contact persons, the user can choose the contact person F8, and drag the icon of contact person F8 to the group of "France", so as to add the contact person F8 to the group of "France", or open the edit menu of the contact person F8 and select the group for "France", then the contact person F8 is added to the group of "France".

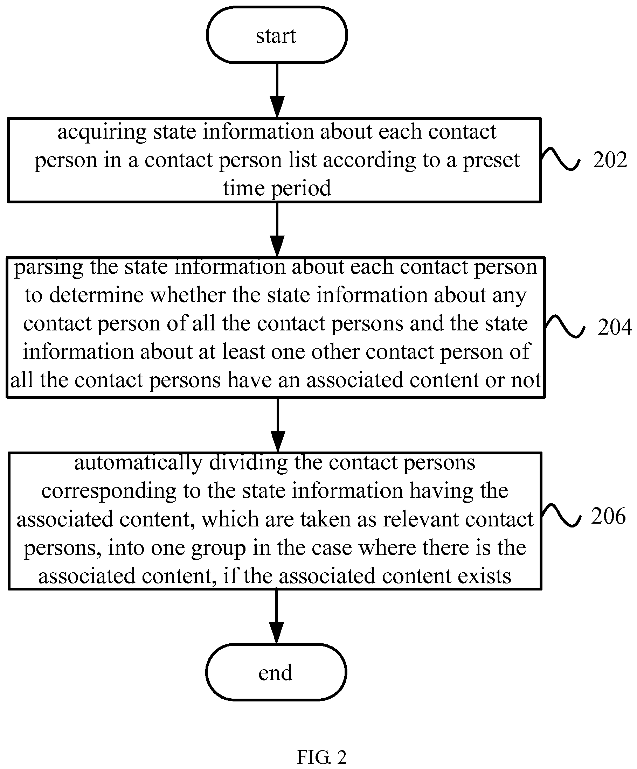

Referring to FIG. 2, FIG. 2 is a flowchart of a method for grouping contact persons according to another embodiment of the present disclosure.

As shown in FIG. 2, the method for grouping contact persons according to another embodiment of the present disclosure, includes: step 202, acquiring state information about each contact person in a contact person list according to a preset time period; step 204, parsing the state information about each contact person to determine whether the state information about any contact person of all the contact persons and the state information about at least one other contact person of all the contact persons have an associated content or not; and step 206, automatically dividing the contact persons corresponding to the state information having the associated content, which are taken as relevant contact persons, into one group in the case where there is the associated content, if the associated content exists.

In the embodiment of the present disclosure, the contact person list can be an address book of the Internet, such as the address book of QQ, Fetion or other social tools or instant messaging (IM) services. When a contact person is in use of a social tool, that is, when a social tool is in use by a user, then the contact person tends to edit his/her information such as mental state, geographical location information and daily life information into the state information. When the user also uses the social tools, the state information of the contact persons is usually displayed behind or at one side of pictures (such as contact photo) of the contact person, then the terminal can obtain the state information about each contact person and parse the state information, and determine whether the state information about each contact person has an associated content or not with each other. If the terminal determines that the state information of each contact person has the associated content, then the terminal can determine contents such as present mental state, geographical location and daily life of the contact persons have common points, or the terminal can determine which contact persons are listening to the same songs, playing the same games, and so one, then the terminal can divide the contact persons corresponding to the state information having the common points, which are taken as relevant contact persons, into one group. Thus, the user can know or determine the common points of the contact persons in each group according to the state information of the contact persons in each group, and then quickly contact and communicate with the contact persons in each group according to the common points. Thus, by means of the technical solution, contact persons can be automatically grouped according to the state information, but also can automatically provide social circles each of which has a common topic for the user, therefore improving the user experience.

In detail, for example, when the user logs in an IM service such as QQ, and there are 20 contact persons in the contact person list, then the terminal 100 determines whether current time is in the preset time period or not; if the current time is in the preset time period, then the terminal 100 can automatically acquire the state information about each contact person of the 20 contact persons, and further parse the state information about each contact person by means of, such as, keyword recognition technology or semantic recognition technology. For example, the state information of a contact person F1 is: France's cold ah, really can't stand it! The state information of a contact person F2 is: Come to Paris, it's a romantic city. The state information of a contact person F3 is: The Triumphal arch is just like that, saw just know it's very common. The state information of a contact person F4 is: met a Huawei employee on a street of France. The state information of a contact person F5 is: The Louvre, is really very good! After parsing, the terminal 100 can determine that the state information of above mentioned five contact persons F1, F2, F3, F4 and F5 is associated with "France", that is, the state information of the above mentioned five contact persons F1, F2, F3, F4 and F5 has the associated content, then the above mentioned five contact persons F1, F2, F3, F4 and F5 are divided into one independent group. Thus, when seeing the group, the user can determine the common topic of the five contact persons in the group is "France", so that the user can conveniently establish a communication topic with the contact persons in the group, or conduct social intercourse with the whole group.

Preferably, the step 206 includes: step 2062, copying the relevant contact persons corresponding to the state information having the associated content; step 2064, creating an associated group according to the associated content; and step 2066, pasting the relevant contact persons to the associated group.

In this technical solution, when automatically dividing the contact persons according to the state information, the contact persons corresponding to the state information having the associated content cannot be moved to the group which is newly created (namely, a newly created group), but are copied to the newly created group. Thus, when the state information of the contact persons has an association with multiple groups, then the contact persons corresponding to the state information having the associated content can be copied and pasted to each group.

For example, if the 20 contact persons in the contact person list also include a contact person F6 and a contact person F7; the state information of the contact person F6 is: who painted the Mona Lisa? The state information of the contact person F7 is: is the statue of Venus armless before getting into the Louvre? After parsing the state information of the contact persons F6 and F7, the terminal 100 can determine that the state information of contact persons F5, F6 and F7 is associated with "Louvre", that is, the state information of the contact persons F5, F6 and F7 has the associated content, at the same time, the state information of the above mentioned five contact persons F1, F2, F3, F4 and F5 is associated with "France", then a group about "France" is established, and the contact persons F1-F5 are copied to this group about "France". Another group about "Louvre" is established, and the contact persons F5, F6 and F7 are copies to the group about "Louvre", therefore avoiding a contact person who may belong to multiple groups only being divided into one group.

Preferably, the step 206 further includes: generating corresponding subject according to the associated content; determining a target subject according to a selection instruction for selecting the subject, and further determining target contact persons about the state information corresponding to the target subject; and dividing the target contact persons into one group.

The terminal 100 can generate the subject according to the associated content corresponding to the group, and the user can select the subject of the group required for generation. Thus, according to the subject selected by the user, the terminal 100 can divide the contact persons belonging to the state information corresponding to the subject into one group, thereby realizing manual control of the groups by the user. Moreover, according to the subject of the group, the user can intuitively understand the common topic of the contact persons of each group, and then quickly query each interesting group.

For example, for above mentioned 20 contact persons, after parsing the state information of these contact persons, it is determined that there are two subjects, namely, "France" and "Louvre", and the two subjects of "France" and "Louvre" are displayed. When the user selects any one of the two subjects, such as, "France", then the contact persons can be grouped according to the subject of "France", and the group of "Louvre" is created.

Preferably, before the step 202, the method further includes: setting a preset time period according to a time setting instruction.

The user can set a preset time period which is used for automatic grouping operation according to the need, so that generated groups of contact persons can provide the user with a social circle with a common topic, on the other hand, cannot bother the user when the user does not need the social circle with a common topic.

For example, the preset time periods set by the user for executing grouping operation include: 9:00-17:00, 18:00-22:00, and 23:00-24:00, wherein, the preset time period of 9:00 -17:00 can be set as working time of the user, the preset time period of 18:00-22:00 can be set as night playtime of the user, and the preset time period of 23:00-24:00 can be set as time of trying to sleep. In addition, for preset time period of 17:00-18:00, it can be set as dinner time for the user, so that the user can selectively forbid continuing to parse the state information about the contact persons of each group, so as to eat at ease. For preset time period of 22:00-23:00, it can be set as bathing and washing time for the user, so that the user can selectively forbid continuing to parsing the state information about the contact persons of each group.

Preferably, before the step 202, the method further includes: setting a preset frequency corresponding to the preset time period for acquiring the state information according to a frequency setting instruction. The step 202 further includes: acquiring the state information about each contact person according to the corresponding preset frequency during the preset time period.

Since different time periods can be accordingly set different grouping frequencies, so that the terminal 100, according to user's chat demands in different time periods, can provide new topic groups for the user with the corresponding frequencies.

For example, the preset time periods set by the user for executing automatically grouping operation include: 9:00-17:00, 18:00-22:00, and 23:00-24:00, wherein, the preset time period of 9:00 -17:00 can be set as working time of the user, then the preset frequency corresponding to the grouping operation can be set to be lower, such as, acquiring the state information about the contact persons in an IM service such as QQ once every two hours on average and then automatically grouping the contact persons; the preset time period of 18:00-22:00 can be set as night playtime of the user, then the preset frequency corresponding to the grouping operation can be set to be higher, such as acquiring the state information about the contact persons in an IM service such as QQ once every half an hour on average and then automatically grouping the contact persons; and the preset time period of 23:00-24:00 can be set as time of trying to sleep, then the preset frequency corresponding to the grouping operation can be set to be modest, such as acquiring the state information about the contact persons in an IM service such as QQ once every hour and then automatically grouping the contact persons.

Preferably, the method further includes: determining whether there is an operation on the group or not in a preset time period, and determining that the group loses timeliness and deleting the group if there is not an operation on the group.

The groups which are not used for a long time or never be used can be deleted, so as to reduce the waste of storage space, and convenient to view common groups for the user. It should be understood that the user can set the preset time period for determining the timeliness according to need.

For example, for above mentioned two groups of "France" and "Louvre", after determining the timeliness of the groups of "France" and "Louvre", the timeliness judging unit 116 determines that the user has not operation on the group of "Louvre" for 72 hours, and the preset time period is 50 hours. Thus, it can be determined that the group of "Louvre" has lost timeliness, and the user loses interest in this group or the contact persons in this group, then this group is deleted.

Preferably, the method further includes: setting the group into an immobilization group according to a group immobilization instruction, wherein, the timeliness of the immobilization group is not determined.

In this embodiment of the present disclosure, the user can set a specified group into a corresponding immobilization group, so that the specified group can exist forever, but not be deleted even if the specified group is not used for a long time, and the specified group can be deleted only by means of manual manipulation of the user.

For example, for the above mentioned two groups of "France" and "Louvre", the user can set the group of "Louvre" into an immobilization group, and the immobilization group will not carry out a timeliness decision, and will continue to exist even if the user does not have any operation on the group of "Louvre" more than the preset time period.

Preferably, the method further includes: acquiring the state information about the user, parsing the state information about the user and judging whether or not the associated content has a topic content that is associated with the state information about the user, and outputting a prompt message and displaying the topic content when the associated content has a topic content that is associated with the state information about the user.

Moreover, parsing the state information about the user can query the associated content associated with the state information about the user, thereby convenient to quickly find out a topic group related to the user.

For example, as described in above example, when the state information about a user is: the heroine of the Phantom of the Louvre is beautiful! After parsing the state information of the user, the terminal 100 can determine that 20 contact persons in an IM service such as QQ have a topic content that is associated with the state information about the user. That is, the state information about the contact persons of F5, F6 and F7 is associated with the state information about the user. Thus, the topic content "Louvre" of the group including the contact persons F5, F6 and F7 is displayed, and the user is prompted that there is an associated topic content "Louvre", so that the user can quickly find out a topic group related to himself.

Preferably, the method further includes: dividing selected contact persons into one group according to a selection instruction.

In other embodiment of the present disclosure, the user can manually select the contact persons and divide selected contact persons into one group, but without having to decide whether the state information of the selected contact persons has the same content or not.

For example, the user can manually select the contact persons F1, F2 and F7, and then divide the contact persons F1, F2 and F7 into one group, although the state information about contact persons F1, F2 and F7 does not include the same content.

Preferably, the method further includes: deleting a selected group according to a group deleting instruction.

The user can choose one or a few groups according to need, and delete the selected group by means of executing the group deleting instruction.

For example, for the above mentioned groups of "France" and "Louvre", the user can select the group of "Louvre" and delete the group of "Louvre" according to the group deleting instruction.

Preferably, the method further includes: removing a selected contact person from a group which contains the selected contact person according to a contact deleting instruction.

In the embodiment of the present disclosure, the user can choose one or more contact persons from a certain group and perform the contact deleting instruction, so as to delete the selected contact person from the group.

For example, for the above mentioned groups of "France" and "Louvre", the user can login the group of "France", and choose the contact persons of F1 and F2, and perform a delete operation, thereby the contact persons of F1 and F2 removed from the group of "France".

Preferably, the method further includes: adding a selected contact person to a selected group according to a contact adding instruction.

In the embodiment of the present disclosure, the user can choose one or more contact persons and add the one or more contact persons to a specified group by means of dragging or editing the one or more contact persons.

For example, for above mentioned 20 contact persons, the user can choose the contact person F8, and drag the icon of contact person F8 to the group of "France", so as to add the contact person F8 to the group of "France", or open the edit menu of the contact person F8 and select the group for "France", then the contact person F8 is added to the group of "France".

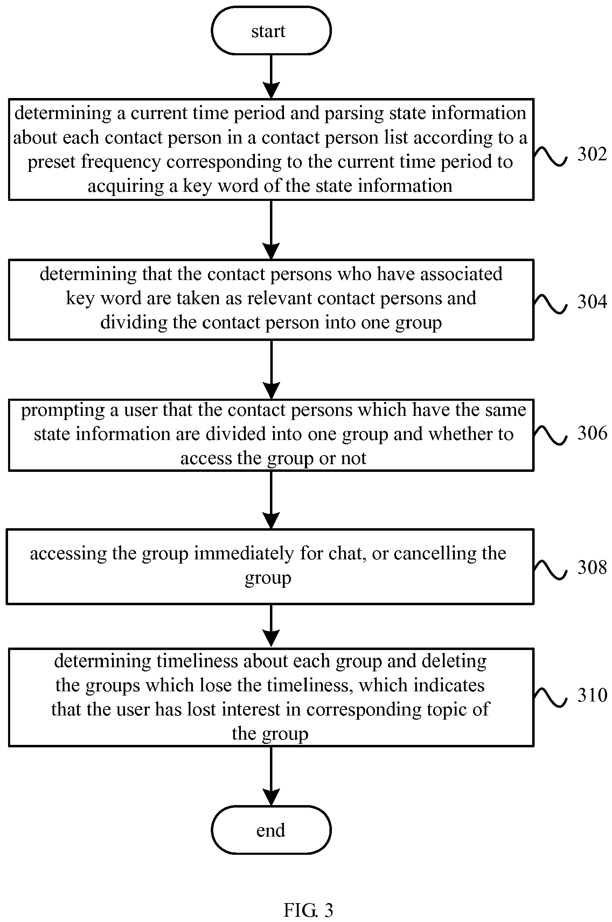

Referring to FIG. 3, FIG. 3 is a detailed flowchart of a method for grouping contact persons according to another embodiment of the present disclosure.

As shown in FIG. 3, the method for grouping contact persons at least includes the following steps in detail.

Step 302, determining a current time period and parsing state information about each contact person in a contact person list according to a preset frequency corresponding to the current time period to acquiring a key word of the state information;

Step 304, determining that the contact persons who have associated key word are taken as relevant contact persons and dividing the contact person into one group;

Step 306, prompting a user that the contact persons which have the same state information are divided into one group and whether to access the group or not;

Step 308, accessing the group immediately for chat, or cancelling the group;

Step 310, determining timeliness about each group and deleting the groups which lose the timeliness, which indicates that the user has lost interest in corresponding topic of the group.

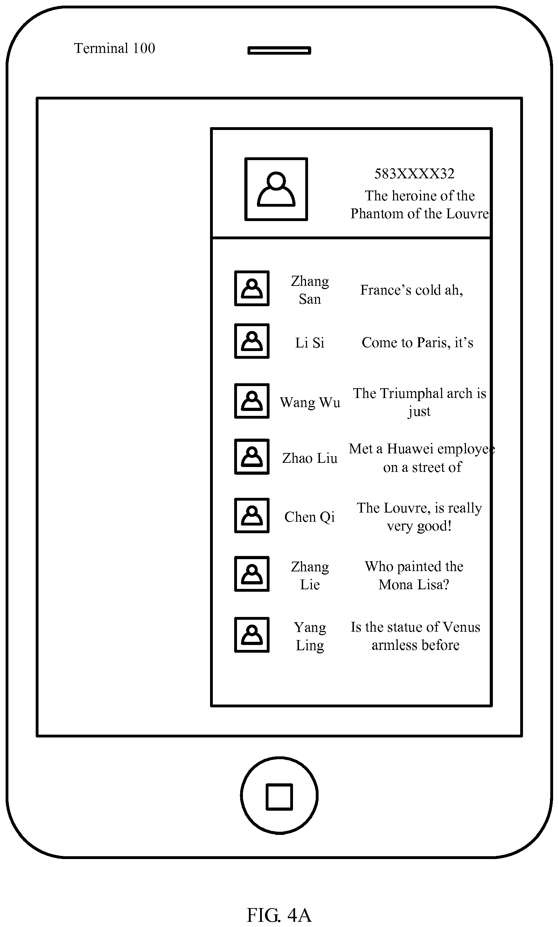

Referring to FIGS. 4A-FIG. 4E, FIGS. 4A-FIG. 4E are schematic diagrams of description of grouping contact persons according to the present disclosure.

As shown in FIG. 4A, when a user logs in an IM service such as QQ, the terminal 100 can automatically acquire the state information about each contact person and parse the state information to determine whether the state information about each contact person has an associated content or not.

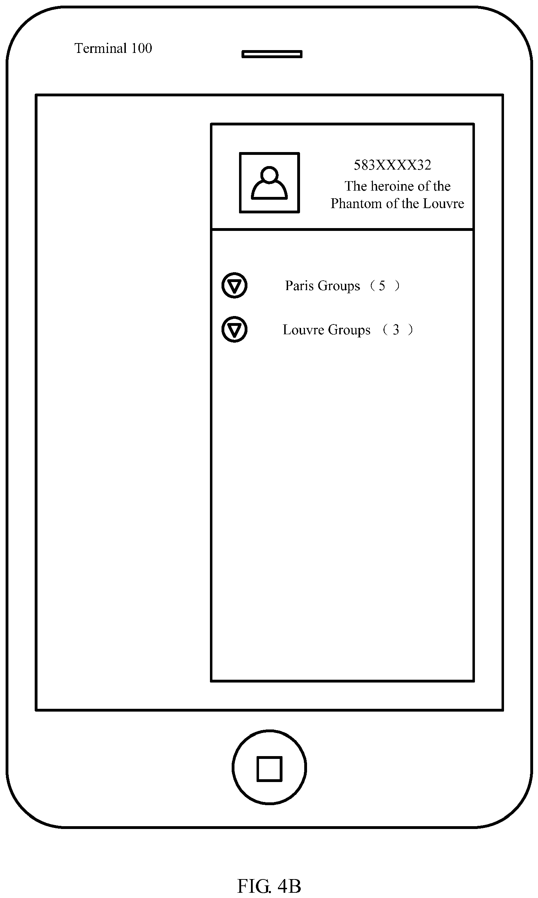

As shown in FIG. 4B, after parsing the state information about each contact person, the terminal 100 can divide contact persons corresponding to the state information having the associated content into one group. For example, as shown in FIG. 4A, the terminal 100 has 7 contact persons in a contact person list, wherein, the state information of a contact person Zhang San is: France's cold ah, really can't stand it! The state information of a contact person Li Si is: Come to Paris, it's a romantic city. The state information of a contact person Wang Wu is: The Triumphal arch is just like that, saw just know it's very common. The state information of a contact person Zhao Liu is: met a Huawei employee on a street of France. The state information of a contact person Chen Qi is: The Louvre, is really very good! The state information of a contact person Zhang Lei is: who painted the Mona Lisa? The state information of a contact person Yang Ling is: is the statue of Venus armless before getting into the Louvre? After parsing the state information of the 7 contact persons, the terminal 100 can determine that the state information of contact persons Zhang San, Li Si, Wang Wu, Zhao Liu and Chen Qi is associated with a common topic "Paris" and establish a group about the common topic "Paris" which includes above mentioned 5 contact persons. At the same time, the terminal 100 determines that the state information of contact persons Chen Qi, Zhang Lei and Yang Ling is associated with another common topic "Louvre", and establishes another group about the common topic "Louvre" which includes above mentioned 3 contact persons.

The user can view each contact person in each group by clicking a drop-down menu, and can also manually enter a topic to enable the terminal 100 to create a group according to the topic, and divide contact persons which are associated with the topic into the group.

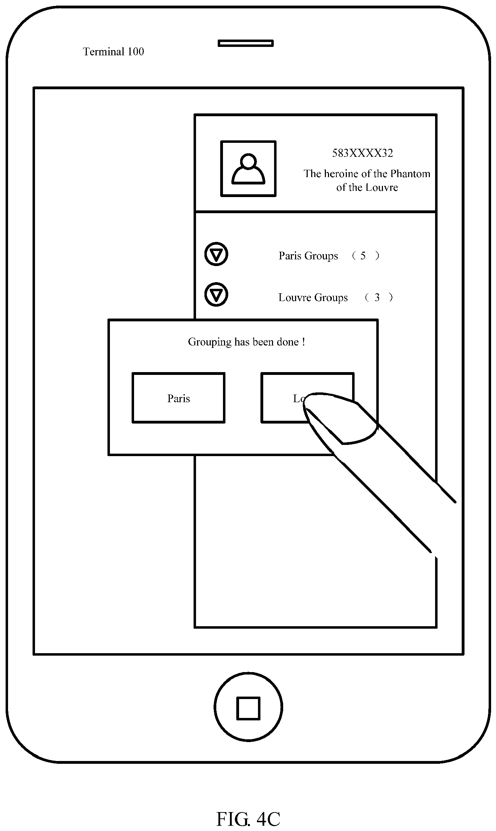

As shown in FIG. 4C, after the groups "Paris" and "Louvre" are established, the terminal 100 can display a prompt message to prompt the user grouping has been completed, and display topic name of each group to the user. Thus, the user can select a topic and enter a group corresponding to the topic, so as to communicate with contact persons within the group.

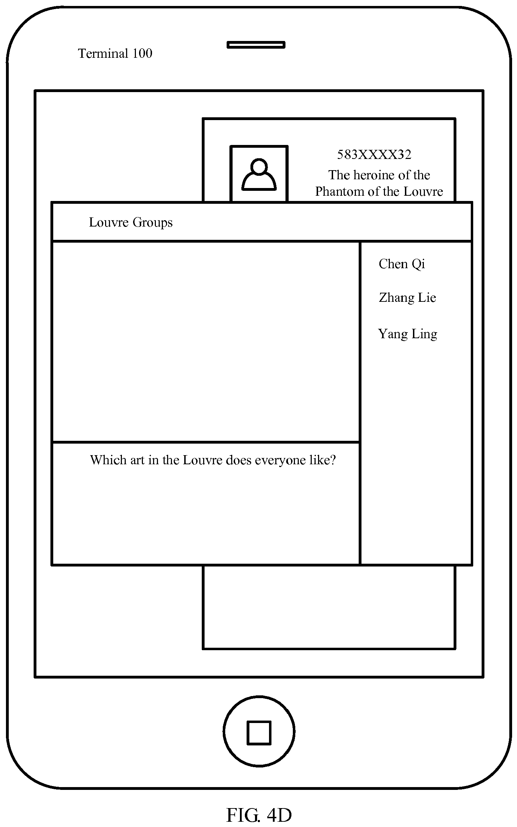

As shown in FIG. 4D, after selecting the group "Louvre", the user enters the group "Louvre" and chat with the contact persons Chen Qi, Zhang Lei and Yang Ling in the group "Louvre". Because the user has the common topic "Louvre" with the above mentioned 3 contact persons, so that the user can easily approach the topic and quickly establish communication with the contact persons.

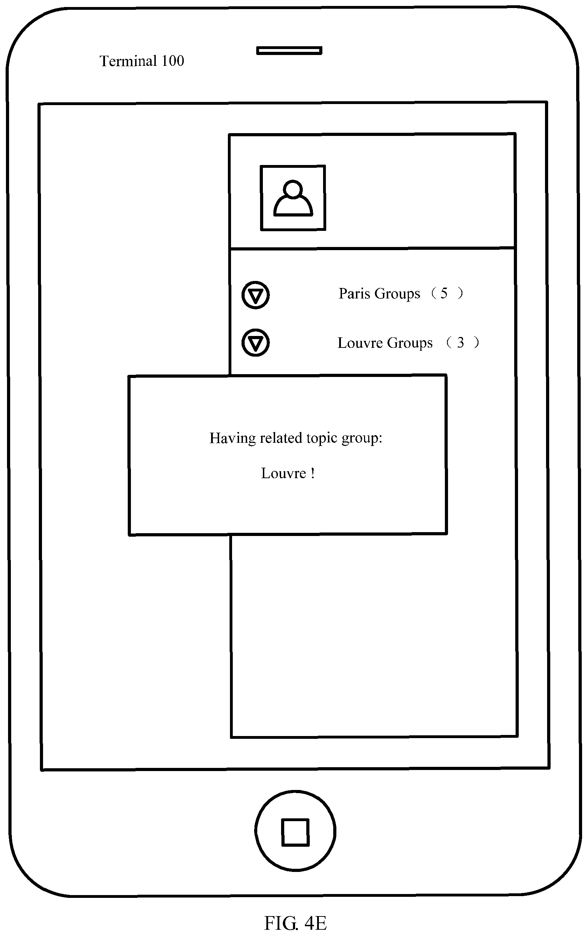

As shown in FIG. 4E, the terminal 100 can also parse state information about a current user. For example, the state information about the user is: the heroine of the Phantom of the Louvre is beautiful! After parsing the state information of the user, the terminal 100 can determine that contact persons in an IM service such as QQ have the associated content with the state information about the user, and the associated content is: "Louvre". The terminal 100 can display a prompt message to prompt the user there is an associated content and what the associated content is, so that the user can accurately and quickly find a group which the user is interested in.

It should be noted that the user can also manually create a group according to the need, and drag the contact persons into the group, and on the other hand, the user can also delete the existing groups according to the need. The terminal 100 can also calculate the number that each group is clicked, that is, the terminal 100 can calculate operating frequency of each group, and automatically sort the groups according to the operating frequency, such as in ascending order or descending order, making the sequence of the groups associated with the operating frequency of the groups.

In combination with the drawings, above descriptions specify the technical solution of the present disclosure in detail, considering that grouping methods in correlation technique cannot provide users with a real-time common topic to which everyone pays attention, so that the user cannot conveniently create the same topic to conduct social intercourse. By means of the technical solution of the present disclosure, contact persons can be grouped according to the state information about them, so as to enable the contact persons having associated state information to be divided into one group, so that a user can quickly and determine a common topic with the contact persons and then conduct social intercourse easily and successfully.

## Claims

1. A terminal (100) comprising:
a state information acquisition unit (102), configured for acquiring state information about each contact person in a contact person list according to a preset time period;
a state information parsing unit (104), configured for parsing the state information about each contact person so as to determine whether the state information about any contact person of all the contact persons and the state information about at least one other contact person of all the contact persons have an associated content or not; and
a grouping dividing unit (106), configured for automatically dividing the contact persons corresponding to the state information having the associated content, which are taken as relevant contact persons, into one group in the case where there is the associated content;
**characterised in that** the terminal further comprises:
a time setting unit (112), configured for setting the preset time period according to a time setting instruction; and
a frequency setting unit (114), configured for setting a preset frequency corresponding to the preset time period for acquiring the state information according to a frequency setting instruction;
wherein, the state information acquisition unit is further configured for acquiring the state information about each contact person according to the corresponding preset frequency during the preset time period.

2. The terminal according to claim 1, wherein the group dividing unit comprise:
a contact person copying subunit, configured for copying the relevant contact persons corresponding to the state information having the associated content;
a group creating subunit, configured for creating an associated group according to the associated content; and
a contact person pasting subunit, configured for pasting the relevant contact persons to the associated group.

3. The terminal according to claim 1, further comprising:
a subject generating unit, configured for generating a corresponding subject according to the associated content; and
a target subject determining unit, configured for determining a target subject according to a selection instruction for selecting the subject, and further determining target contact persons about the state information corresponding to the target subject;
wherein, the group dividing unit is further configured for dividing the target contact persons into one group.

4. The terminal according to claim 1, wherein the state information parsing unit is configured to parse the state information by means of keyword recognition technology or semantic recognition technology to identify the associated content.

5. The terminal according to claim 1, further comprising:
a timeliness judging unit, configured for determining whether there is an operation on the group or not in a preset time period and determining that the group loses timeliness and deleting the group if there is not an operation on the group.

6. The terminal according to claim 5, further comprising:
a group immobilization unit, configured for setting the group into an immobilization group according to a group immobilization instruction; wherein, the timeliness judging unit does not determine the timeliness of the immobilization group.

7. The terminal according to any of claims 1 to6, wherein the state information acquisition unit further configured for acquiring the state information about a user, the state information parsing unit further configured for parsing the state information about the user and judging whether or not the associated content has a topic content that is associated with the state information about the user;
wherein the terminal further comprises:
a prompting unit, configured for outputting a prompt message and displaying the topic content when the state information unit determines that the associated content has a topic content that is associated with the state information about the user.

8. A method for grouping contact persons, comprising:
acquiring (202) state information about each contact person in a contact person list according to a preset time period;
parsing (204) the state information about each contact person to determine whether the state information about any contact person of all the contact persons and the state information about at least one other contact person of all the contact persons have an associated content or not; and
automatically dividing (206) the contact persons corresponding to the state information having the associated content, which are taken as relevant contact persons, into one group in the case where there is the associated content, if the associated content exists,
**characterised by**:
setting the preset time period according to a time setting instruction;
setting a preset frequency corresponding to the preset time period for acquiring the state information according to a frequency setting instruction;
wherein the state information about each contact person is acquired according to the corresponding preset frequency during the preset time period.

9. The method for grouping contact persons according to claim 8, wherein automatically dividing the contact persons corresponding to the state information having the associated content comprises:
copying the relevant contact persons corresponding to the state information having the associated content;
creating an associated group according to the associated content; and
pasting the relevant contact persons to the associated group.

10. The method for grouping contact persons according to claim 8, wherein automatically dividing the contact persons corresponding to the state information having the associated content further comprises:
labeling and processing the specified content according to a preset rule comprising:
generating a corresponding subject according to the associated content;
determining a target subject according to a selection instruction for selecting the subject, and further determining target contact persons about the state information corresponding to the target subject; and
dividing the target contact persons into one group.

11. The method for grouping contact persons according to claim 8, wherein parsing the state information comprises identifying the associated content by means of keyword recognition technology or semantic recognition technology.

12. The method for grouping contact persons according to claim 8, further comprising:
determining whether there is an operation on the group or not in a preset time period, and determining that the group loses timeliness and deleting the group if there is not an operation on the group.

13. The method for grouping contact persons according to claim 12, further comprising:
setting the group into an immobilization group according to a group immobilization instruction; wherein, the timeliness of the immobilization group is not judged.

14. The method for grouping contact persons according to any of claims 8 to 14, further comprising:
acquiring the state information about the user;
parsing the state information about the user and judging whether or not the associated content has a topic content that is associated with the state information about the user; and
outputting a prompt message and displaying the topic content when the associated content has a topic content that is associated with the state information about the user.

## Patentansprüche

1. Endgerät (100), umfassend:
eine Statusinformationserfassungseinheit (102), die konfiguriert ist, Statusinformationen über jede Kontaktperson in einer Kontaktpersonenliste gemäß einer voreingestellten Zeitspanne zu erfassen;
eine Statusinformations-Parsing-Einheit (104), die konfiguriert ist, die Statusinformationen über jede Kontaktperson zu parsen, um so zu bestimmen, ob die Statusinformationen über jede Kontaktperson aller Kontaktpersonen und die Statusinformationen über mindestens eine weitere Kontaktperson aller Kontaktpersonen einen zugeordneten Inhalt aufweisen oder nicht; und
eine Gruppierungsunterteilungseinheit (106), die konfiguriert ist, die Kontaktpersonen entsprechend den, den zugeordneten Inhalt aufweisenden Statusinformationen, die als relevante Kontaktpersonen genommen werden, in eine Gruppe in dem Fall automatisch zu unterteilen, in dem der zugeordnete Inhalt vorliegt;
**dadurch gekennzeichnet, dass** das Endgerät ferner Folgendes umfasst:
eine Zeiteinstelleinheit (112), die konfiguriert ist, die voreingestellte Zeitspanne gemäß einem Zeiteinstellbefehl einzustellen; und
eine Frequenzeinstelleinheit (114), die konfiguriert ist, eine voreingestellte Frequenz entsprechend der voreingestellten Zeitspanne einzustellen, um die Statusinformationen gemäß einem Frequenzeinstellbefehl zu erfassen;
wobei die Statusinformationserfassungseinheit ferner konfiguriert ist, die Statusinformationen über jede Kontaktperson gemäß der entsprechenden voreingestellten Frequenz während der voreingestellten Zeitspanne zu erfassen.

2. Endgerät gemäß Anspruch 1, wobei die Gruppenunterteilungseinheit Folgendes umfasst:
eine Kontaktpersonkopier-Subeinheit, die konfiguriert ist, die relevanten Kontaktpersonen entsprechend den Statusinformationen, die den zugeordneten Inhalt aufweisen, zu kopieren;
eine Gruppenerzeugungs-Subeinheit, die konfiguriert ist, eine zugeordnete Gruppe gemäß dem zugeordneten Inhalt zu erzeugen; und
eine Kontaktpersoneinfügeeinheit, die konfiguriert ist, die relevanten Kontaktpersonen in die zugeordnete Gruppe einzufügen.

3. Endgerät gemäß Anspruch 1, ferner umfassend:
eine Gegenstandserzeugungseinheit, die konfiguriert ist, einen entsprechenden Gegenstand gemäß dem zugeordneten Inhalt zu erzeugen; und
eine Zielgegenstandsbestimmungseinheit, die konfiguriert ist, einen Zielgegenstand gemäß einem Auswahlbefehl zu bestimmen, um den Gegenstand auszuwählen, und ferner Zielkontaktpersonen über die dem Zielgegenstand entsprechenden Statusinformationen zu bestimmen;
wobei die Gruppenunterteilungseinheit ferner konfiguriert ist, die Zielkontaktpersonen in eine Gruppe zu unterteilen.

4. Endgerät gemäß Anspruch 1, wobei die Statusinformations-Parsing-Einheit konfiguriert ist, die Statusinformationen mittels Schlüsselworterkennungstechnologie oder semantischer Erkennungstechnologie zu parsen, um den zugeordneten Inhalt zu identifizieren.

5. Endgerät gemäß Anspruch 1, ferner umfassend:
eine Aktualitätsbeurteilungseinheit, die konfiguriert ist zu bestimmen, ob eine Operation an der Gruppe durchgeführt wird oder nicht, und zwar in einer voreingestellten Zeitspanne, und zu bestimmen, dass die Gruppe an Aktualität verliert, und die Gruppe zu löschen, wenn an der Gruppe keine Operation durchgeführt wird.

6. Endgerät gemäß Anspruch 5, ferner umfassend:
eine Gruppenimmobilisierungseinheit, die konfiguriert ist, die Gruppe gemäß einem Gruppenimmobilisierungsbefehl in eine Immobilisierungsgruppe einzustellen; wobei die Aktualitätsbeurteilungseinheit die Aktualität der Immobilisierungsgruppe nicht bestimmt.

7. Endgerät gemäß einem der Ansprüche 1 bis 6, wobei die Statusinformationserfassungseinheit ferner konfiguriert ist, die Statusinformationen über einen Anwender zu erfassen, wobei die Statusinformations-Parsing-Einheit ferner konfiguriert ist, die Statusinformationen über den Anwender zu parsen und zu beurteilen, ob der zugeordnete Inhalt einen Themeninhalt aufweist oder nicht, der den Statusinformationen über den Anwender zugeordnet ist;
wobei das Endgerät ferner Folgendes umfasst:
eine Eingabeaufforderungseinheit, die konfiguriert ist, eine Eingabeaufforderungsnachricht auszugeben und den Themeninhalt anzuzeigen, wenn die Statusinformationseinheit bestimmt, dass der zugeordnete Inhalt einen Themeninhalt aufweist, der den Statusinformationen über den Anwender zugeordnet ist.

8. Verfahren zur Gruppierung von Kontaktpersonen, umfassend:
Erfassen (202) von Statusinformationen über jede Kontaktperson in einer Kontaktpersonenliste gemäß einer voreingestellten Zeitspanne;
Parsen (204) der Statusinformationen über jede Kontaktperson um zu bestimmen, ob die Statusinformationen über irgendeine Kontaktperson aller Kontaktpersonen und die Statusinformationen über mindestens eine weitere Kontaktperson aller Kontaktpersonen einen zugeordneten Inhalt aufweisen oder nicht; und
automatisches Unterteilen (206) der Kontaktpersonen entsprechend den Statusinformationen, die den zugordneten Inhalt aufweisen, die als relevante Kontaktpersonen genommen werden, in eine Gruppe in dem Fall, in dem der zugeordnete Inhalt vorliegt, wenn der zugeordnete Inhalt vorhanden ist,
**gekennzeichnet durch**:
Einstellen der voreingestellten Zeitspanne gemäß einem Zeiteinstellbefehl;
Einstellen einer voreingestellten Frequenz gemäß der voreingestellten Zeitspanne, um die Statusinformationen gemäß einem Frequenzeinstellungsbefehl zu erfassen;
wobei die Statusinformationen über jede Kontaktperson gemäß der entsprechenden voreingestellten Frequenz während der voreingestellten Zeitspanne erfasst werden.

9. Verfahren zur Gruppierung von Kontaktpersonen gemäß Anspruch 8,
wobei ein automatisches Unterteilen der Kontaktpersonen entsprechend den, den zugeordneten Inhalt aufweisenden Statusinformationen Folgendes umfasst:
Kopieren der relevanten Kontaktpersonen entsprechend den Statusinformationen, die den zugeordneten Inhalt aufweisen;
Erzeugen einer zugeordneten Gruppe gemäß dem zugeordneten Inhalt; und
Einfügen der relevanten Kontaktpersonen in die zugeordnete Gruppe.

10. Verfahren zur Gruppierung von Kontaktpersonen gemäß Anspruch 8,
wobei ein automatisches Unterteilen der Kontaktpersonen entsprechend den, den zugeordneten Inhalt aufweisenden Statusinformationen ferner Folgendes aufweist:
Kennzeichnen und Verarbeiten des spezifischen Inhalts gemäß einer voreingestellten Regel, umfassend:
Erzeugen eines entsprechenden Gegenstandes gemäß dem zugeordneten Inhalt;
Bestimmen eines Zielgegenstandes gemäß einem Auswahlbefehl zum Auswählen des Gegenstandes, und ferner Bestimmen von Zielkontaktpersonen über die Zustandsinformationen entsprechend dem Zielgegenstand; und
Unterteilen der Zielkontaktpersonen in eine Gruppe.

11. Verfahren zur Gruppierung von Kontaktpersonen gemäß Anspruch 8,
wobei ein Parsen der Statusinformationen ein Identifizieren des zugeordneten Inhalts mittels Schlüsselworterkennungstechnologie oder semantischer Erkennungstechnologie umfasst.

12. Verfahren zur Gruppierung von Kontaktpersonen gemäß Anspruch 8, ferner umfassend:
Bestimmen, ob an der Gruppe eine Operation durchgeführt wird oder nicht, und zwar in einer voreingestellten Zeitspanne, und Bestimmen, dass die Gruppe an Aktualität verliert, und Löschen der Gruppe, wenn an der Gruppe keine Operation durchgeführt wird.

13. Verfahren zur Gruppierung von Kontaktpersonen gemäß Anspruch 12, ferner umfassend:
Einstellen der Gruppe in eine Immobilisierungsgruppe gemäß einem Gruppenimmobilisierungsbefehl; wobei die Aktualität der Immobilisierungsgruppe nicht beurteilt wird.

14. Verfahren zur Gruppierung von Kontaktpersonen gemäß einem der Ansprüche 8 bis 14, ferner umfassend:
Erfassen der Statusinformationen über den Anwender;
Parsen der Statusinformationen über den Anwender und Beurteilen, ob der zugeordnete Inhalt einen Themeninhalt aufweist oder nicht, der den Statusinformationen über den Anwender zugeordnet ist; und
Ausgeben einer Eingabeaufforderungsnachricht und Anzeigen des Themeninhalts, wenn der zugeordnete Inhalt einen Themeninhalt aufweist, der den Statusinformationen über den Anwender zugeordnet ist.

## Revendications

1. Terminal (100) comprenant :
une unité d'acquisition d'informations d'état (102), configurée de manière à acquérir des informations d'état connexes à chaque personne de contact dans une liste de personnes de contact selon une période de temps prédéfinie ;
une unité d'analyse d'informations d'état (104), configurée de manière à analyser les informations d'état connexes à chaque personne de contact de manière à déterminer si les informations d'état connexes à une quelconque personne de contact parmi toutes les personnes de contact et les informations d'état connexes à au moins une autre personne de contact parmi toutes les personnes de contact présentent ou non un contenu associé ; et
une unité de répartition en groupes (106), configurée de manière à répartir automatiquement les personnes de contact correspondant aux informations d'état présentant le contenu associé, lesquelles sont considérées comme des personnes de contact pertinentes, dans un groupe, dans le cas où le contenu associé existe ;
**caractérisé en ce que** le terminal comprend en outre :
une unité de définition de temps (112), configurée de manière à définir la période de temps prédéfinie selon une instruction de définition de temps ; et
une unité de définition de fréquence (114), configurée de manière à définir une fréquence prédéfinie correspondant à la période de temps prédéfinie pour acquérir les informations d'état selon une instruction de définition de fréquence ;
dans lequel l'unité d'acquisition d'informations d'état est en outre configurée de manière à acquérir les informations d'état connexes à chaque personne de contact selon la fréquence prédéfinie correspondante au cours de la période de temps prédéfinie.

2. Terminal selon la revendication 1, dans lequel l'unité de répartition en groupe comprend :
une sous-unité de copie de personnes de contact, configurée de manière à copier les personnes de contact pertinentes correspondant aux informations d'état présentant le contenu associé ;
une sous-unité de création de groupe, configurée de manière à créer un groupe associé selon le contenu associé ; et
une sous-unité de collage de personnes de contact, configurée de manière à coller les personnes de contact pertinentes au groupe associé.

3. Terminal selon la revendication 1, comprenant en outre :
une unité de génération de sujet, configurée de manière à générer un sujet correspondant selon le contenu associé ; et
une unité de détermination de sujet cible, configurée de manière à déterminer un sujet cible selon une instruction de sélection visant à sélectionner le sujet, et à déterminer en outre des personnes de contact cibles en ce qui concerne les informations d'état correspondant au sujet cible ;
dans lequel l'unité de répartition en groupe est en outre configurée de manière à répartir les personnes de contact cibles dans un groupe.

4. Terminal selon la revendication 1, dans lequel l'unité d'analyse d'informations d'état est configurée de manière à analyser les informations d'état au moyen d'une technologie de reconnaissance de mots-clés ou d'une technologie de reconnaissance sémantique en vue d'identifier le contenu associé.

5. Terminal selon la revendication 1, comprenant en outre :
une unité de détermination d'opportunité, configurée de manière à déterminer s'il existe ou non une opération sur le groupe au cours d'une période de temps prédéfinie, à déterminer que le groupe perd l'opportunité, et à supprimer le groupe en l'absence d'opération sur le groupe.

6. Terminal selon la revendication 5, comprenant en outre :
une unité d'immobilisation de groupe, configurée de manière à placer le groupe dans un groupe d'immobilisation selon une instruction d'immobilisation de groupe ; dans lequel l'unité de détermination d'opportunité ne détermine pas l'opportunité du groupe d'immobilisation.

7. Terminal selon l'une quelconque des revendications 1 à 6, dans lequel l'unité d'acquisition d'informations d'état est en outre configurée de manière à acquérir les informations d'état connexes à un utilisateur, l'unité d'analyse d'informations d'état étant en outre configurée de manière à analyser les informations d'état connexes à l'utilisateur et à déterminer si le contenu associé présente ou non un contenu thématique qui est associé aux informations d'état connexes à l'utilisateur ;
dans lequel le terminal comprend en outre :
une unité d'invite, configurée de manière à fournir en sortie un message d'invite et à afficher le contenu thématique lorsque l'unité d'analyse d'informations d'état détermine que le contenu associé présente un contenu thématique qui est associé aux informations d'état connexes à l'utilisateur.

8. Procédé de groupement de personnes de contact, comprenant les étapes ci-dessous consistant à :
acquérir (202) des informations d'état connexes à chaque personne de contact dans une liste de personnes de contact selon une période de temps prédéfinie ;
analyser (204) les informations d'état connexes à chaque personne de contact de manière à déterminer si les informations d'état connexes à une quelconque personne de contact parmi toutes les personnes de contact et les informations d'état connexes à au moins une autre personne de contact parmi toutes les personnes de contact présentent ou non un contenu associé ; et
répartir automatiquement (206) les personnes de contact correspondant aux informations d'état présentant le contenu associé, lesquelles sont considérées comme des personnes de contact pertinentes, dans un groupe, dans le cas où et si le contenu associé existe ;
**caractérisé par** les étapes ci-dessous consistant à :
définir la période de temps prédéfinie selon une instruction de définition de temps ; et
définir une fréquence prédéfinie correspondant à la période de temps prédéfinie pour acquérir les informations d'état selon une instruction de définition de fréquence ;
dans lequel les informations d'état connexes à chaque personne de contact sont acquises selon la fréquence prédéfinie correspondante au cours de la période de temps prédéfinie.

9. Procédé de groupement de personnes de contact selon la revendication 8, dans lequel l'étape de répartition automatique des personnes de contact correspondant aux informations d'état présentant le contenu associé comprend les étapes ci-dessous consistant à :
copier les personnes de contact pertinentes correspondant aux informations d'état présentant le contenu associé ;
créer un groupe associé selon le contenu associé ; et
coller les personnes de contact pertinentes au groupe associé.

10. Procédé de groupement de personnes de contact selon la revendication 8, dans lequel l'étape de répartition automatique des personnes de contact correspondant aux informations d'état présentant le contenu associé comprend en outre l'étape ci-dessous consistant à :
étiqueter et traiter le contenu spécifié selon une règle prédéfinie, et notamment :
générer un sujet correspondant selon le contenu associé ;
déterminer un sujet cible selon une instruction de sélection visant à sélectionner le sujet, et déterminer en outre des personnes de contact cibles connexes aux informations d'état correspondant au sujet cible ; et
répartir les personnes de contact cibles dans un groupe.

11. Procédé de groupement de personnes de contact selon la revendication 8, dans lequel l'étape d'analyse des informations d'état comprend l'étape consistant à identifier le contenu associé au moyen d'une technologie de reconnaissance de mots-clés ou d'une technologie de reconnaissance sémantique.

12. Procédé de groupement de personnes de contact selon la revendication 8, comprenant en outre les étapes ci-dessous consistant à :
déterminer s'il existe ou non une opération sur le groupe au cours d'une période de temps prédéfinie, déterminer que le groupe perd l'opportunité, et supprimer le groupe en l'absence d'opération sur le groupe.

13. Procédé de groupement de personnes de contact selon la revendication 12, comprenant en outre l'étape ci-dessous consistant à :
placer le groupe dans un groupe d'immobilisation selon une instruction d'immobilisation de groupe ; dans lequel, l'opportunité du groupe d'immobilisation n'est pas déterminée.

14. Procédé de groupement de personnes de contact selon l'une quelconque des revendications 8 à 14, comprenant en outre les étapes ci-dessous consistant à :
acquérir les informations d'état connexes à l'utilisateur ;
analyser les informations d'état connexes à l'utilisateur et déterminer si le contenu associé présente ou non un contenu thématique qui est associé aux informations d'état connexes à l'utilisateur ; et
fournir en sortie un message d'invite et afficher le contenu thématique lorsque le contenu associé présente un contenu thématique qui est associé aux informations d'état connexes à l'utilisateur.
